# EUROPÄISCHE PATENTSCHRIFT

(11) **EP 1 814 763 B1**
(45) Veröffentlichungstag und Bekanntmachung des Hinweises auf die Patenterteilung: **14.11.2012**
(21) Anmeldenummer: 05792101.7
(22) Anmeldetag: 20.09.2005
(51) Int. Cl.: H04L 12/66, H04L 29/08, B60R 16/023, G07C 5/08, G01M 17/00, G05B 23/00

(54) **Verfahren und System zur Bereitstellung von internen diagnoserelevanten Informationen in einem Fahrzeug**
Method and system for providing internal diagnostic informations in a vehicle
Procédé et système pour mettre à disposition des données internes et pertinantes pour le diagnostique d'un véhicule

(30) Priorität: 18.11.2004 DE 102004055573
(43) Veröffentlichungstag der Anmeldung: 08.08.2007
(73) Patentinhaber: ROBERT BOSCH GMBH, 70442 Stuttgart (DE)
(72) Erfinder: BOER, Gerrit De, 31139 Hildesheim (DE); KOPMANN, Wolfgang, 31139 Hildesheim (DE); ENGEL, Peter, 31139 Hildesheim (DE)
(86) Internationale Anmeldenummer: PCT/EP2005/054675
(87) Internationale Veröffentlichungsnummer: WO 2006/053797

(56) Entgegenhaltungen:
- WO-A2-01/26338
- WO-A2-2006/044128
- DE-A1- 10 135 898
- DE-A1- 10 237 717
- DE-A1- 10 254 284
- DE-A1- 10 257 030
- DE-A1- 10 348 209
- DE-A1- 19 750 662
- DE-A1-102004 035 793

## Beschreibung

### Stand der Technik

Die vorliegende Erfindung betrifft ein Verfahren und ein System zur Bereitstellung von internen zur Durchführung einer Diagnose relevanten Informationen einer in einem Fahrzeug verfügbaren auf einem Service Gateway laufenden Applikation. Ferner betrifft die vorliegende Erfindung ein Computerprogramm und ein entsprechendes Computerprogrammprodukt.

Die Anzahl der in einem Fahrzeug mit Hilfe von Software realisierten Funktionen nimmt stetig zu. Dabei werden Technologien, die eine Administration bzw. ein Management der dabei zum Einsatz kommenden Softwarekomponenten während des Betriebes eines Fahrzeuges ermöglichen, immer interessanter. Hierzu gehört auch eine sogenannte Ferndiagnose, bei der von einer externen Infrastruktur, wie bspw. des Internets, auf das Fahrzeug zugegriffen wird und eine Diagnose durch eine Fernabfrage durchgeführt wird

Bekannt für einen allgemeinen Zugriff auf in einem Fahrzeug verfügbare Applikationen sind sogenannte Service Gateway Systeme, die im folgenden auch als SGS bezeichnet werden. Ein offenes Service Gateway System für den Heim- und Telematikbereich wird derzeit bei der sogenannten OSGi (Open Service Gateway Initiative) standardisiert.

Die DE 10254284 beschreibt ein dem Oberbegriff des Anspruchs 1 beziehungsweise 8 entsprechendes Verfahren und System für einen fahrzeugbezogenen Telematikdienst. Für den Telematikdienst wird das gleiche Anwendungssprotokoll für eine Luftschnittstelle und eine Kommunikation innerhalb des Fahrzeugs eingesetzt.

Die WO 2006/044128 beschreibt eine Diagnoseeinrichtung- und Schnittstelle, welche mit einem Netzwerk im Fahrzeug verbunden ist. Das Netzwerk weist eine Vielzahl von Knoten auf, welche über die Diagnoseeinrichtung- und Schnittstelle in einem Testmodus zur Leistungsmessung geschaltet werden können.

Die WO 01/26338 beschreibt ein Netzwerk in einem Fahrzeug zur Kommunikation zwischen elektronischen Einheiten innerhalb des Fahrzeugs und außerhalb des Fahrzeugs. Mittels spezieller Einrichtung, Software und Protokolle, wird die Integration neuer Einrichtung und Dienste mit dem Fahrzeugnetzwerk vereinfacht.

Im allgemeinen handelt es sich bei einem SGS um eine Anordnung, die aus einem oder mehreren sogenannten Service Gateways, kurz auch als SG bezeichnet, und einem sogenannten Gateway Operator, auch als GO bezeichnet, besteht.

Ein Service Gateway umfasst einen Applikationsrahmen und ist dabei ferner mit gewissen Basisfunktionen ausgestattet. Zu den Basisfunktionen eines Service Gateways zählen dabei bspw. ein Konfigurations-, ein sogenanntes Life Cycle- und ein Nutzermanagement. Im allgemeinen ist ein Service Gateway plattformunabhängig, d.h. es läuft bspw. in einer Java-Laufzeitumgebung. Ferner ist ein Service Gateway dynamisch konfigurierbar und um Softwarekomponenten dynamisch erweiterbar. Meist kann ein Service Gateway ferner mit elektronischen Komponenten kommunizieren, die mit dem Service Gateway in irgendeiner Weise vernetzt sind. Bei den elektronischen Komponenten kann es sich bspw. um Java-basierte Komponenten oder um andere Module handeln. Die Module können dabei bspw. mit dedizierten Treibern angesprochen werden.

Ein Gateway Operator hat im allgemeinen die Funktion der Administration eines oder mehrerer Service Gateways und einer kontrollierten Bereitstellung und Vermittlung von Diensten für die entsprechenden Service Gateways. Darunter ist bspw. ein sogenanntes Download, eine Aktivierung, eine Deaktivierung und ein Update/Upgrade von Applikationen, die sich auf einem entsprechenden Service Gateway befinden, zu verstehen.

Ein solches Service Gateway System ermöglicht einen Zugriff auf einen sogenannten Klienten (Client), der über ein Service Gateway verfügt. Der Zugriff kann dabei lokal oder aus der Ferne erfolgen. Ein derartiger Zugriff auf einen Klienten wird im allgemeinen mit dem Ziel vorgenommen, Komponenten, wie bspw. Applikationen und Module, des Klienten zu verwalten. Ferner dient ein Zugriff dazu, Dienste und Anwendungen zu kontrollieren und bereitzustellen. Bei einem Einsatz solcher Service Gateway Systeme für eine Wartung von Fahrzeugen befindet sich das entsprechende Service Gateway in der Regel innerhalb des Fahrzeuges und der dazugehörende Gateway Operator in einer externen Infrastruktur. Bei dem Service Gateway kann es sich dabei bspw. um ein in dem Fahrzeug befindliches Multimediaendgerät handeln. Der Gateway Operator kann bspw. auf einem Server eines entsprechenden Fahrzeugherstellers im Internet angeordnet sein.

Eine lokale und/oder eine Fernadministration solcher Service Gateway Systeme werden realisiert, indem definierte Schnittstellen, die von dem entsprechenden Service Gateway zur Kontrolle der auf dem Service Gateway laufenden Applikationen benötigt werden, in einer entsprechenden Anforderungsspezifikation für die Applikationen zwingend vorgegeben werden. Das bedeutet, dass eine Applikation einen Satz definierter Schnittstellen zwingend bereitstellen muss, um konform zu einem Service Gateway zu sein, auf welchem die Applikationen laufen. Das Service Gateway bzw. entsprechende Funktionen bzw. Funktionalitäten des Service Gateways führen dann die Administration unter Nutzung der von den Applikationen bereitgestellten Schnittstellen durch. Bei dem oben genanten offenen Service Gateway System (OSGI) sind dies z.B. Schnittstellen zum Installieren, Deinstallieren, Starten, Stoppen, Aktivieren und Deaktivieren einer entsprechenden Applikation. Über derartige Schnittstellen werden die Applikationen vom Service Gateway administriert und durch Einsatz entsprechender Zusatzdienste ist eine derartige Administration auch aus der Ferne durch den entsprechenden Gateway Operator möglich.

Wie bereits erwähnt, ist es bei einer Fernadministration eines Service Gateways und darauf laufenden Applikationen wichtig, eine Ferndiagnose vorzusehen. Die Bereitstellung einer Ferndiagnose wird bisher auf Basis einer sogenannten Log-Datei realisiert. Das bedeutet, dass seitens des Service Gateways allen auf dem Service Gateway laufenden Applikationen ein entsprechender Dienst, ein sogenannter "Log-Service", bereitgestellt wird Über diesen Dienst wird es den auf dem Service Gateway laufenden Applikationen möglich, Nachrichten in Form einer sogenannten Log-Datei an eine zentrale Stelle im System zu senden. Es existieren bereits auch Lösungen mit mehreren Log-Dateien. Die versendeten Nachrichten können dabei beliebigen Inhalt aufweisen. Es kann sich dabei bspw. um Nachrichten in Bezug auf Statusmeldungen während des Startens der Applikation oder um Versionsangaben handeln. Ferner ist es auch möglich über eine derartige Nachricht Fehlermeldungen zu übermitteln. Der Inhalt der Nachrichten und der Zeitpunkt, wann eine derartige Nachricht gesendet wird, wird bei Programmierung der entsprechenden Applikation festgelegt.

Eine derartige Log-Datei, die alle Art Information enthalten kann, lässt sich unter Einsatz entsprechender Zusatzdienste nunmehr auch aus der Ferne seitens eines Gateway Operators abfragen. Mittels einer Log-Datei ist eine Diagnose des Systems insofern möglich, als der Gateway Operator die entsprechende Log-Datei im Hinblick auf Hinweise auf einen Systemstatus und Applikationsfehler analysieren kann. Allerdings gibt es hier keine direkte Kommunikation zwischen dem Gateway Operator bzw. eine in ihm installierte Diagnoseeinheit und der auf dem entsprechenden Service Gateway laufenden Applikationen. Ein möglicher Informationsaustausch erfolgt ausschließlich mittelbar über die genannte Log-Datei. Das bedeutet, dass ein Gateway Operator nicht auf aktuelle Zustände von auf dem entsprechenden Service Gateway laufenden Applikationen zugreifen kann. Somit sind Werte interner Variablen für ein Gateway Operator nicht unmittelbar zugänglich.

Darüber hinaus ist nicht gewährleistet, dass eine Log-Datei alle für eine Diagnose erforderlichen Informationen enthält, die seitens des Gateway Operators abgefragt und erfasst werden können. Dies liegt darin begründet, dass die Log-Dateien bzgl. Inhalt, Format, Sendezeitpunkt nicht standardisiert sind, und ein Senden einer Fehlermeldung auch nicht automatisch erfolgt.

Darüber hinaus ist eine Analyse einer Log-Datei aufwendig, da oftmals Fehlermeldungen nicht ausgezeichnet, sondern zwischen anderen Meldungen verborgen sein können. Ein häufiges Abfragen einer Log-Datei ist von daher mit einem erheblichen Datentransfer verbunden.

Dadurch, dass eine derartige Abfrage in der Regel drahtlos über Mobilfunk erfolgt, ist diese Abfrage ferner mit hohen Kosten verbunden. Auch kann eine Analyse unter Umständen kompliziert ausfallen, da im Falle des Vorliegens mehrerer Log-Dateien nicht spezifiziert ist, in welchen der Log-Dateien entsprechende Fehlermeldungen vorhanden sind.

Ferner ist das Vorsehen eines Log-Services optional und muss nicht auf einem System implementiert sein, wodurch nicht sicher gestellt ist, dass eine Fehlerdiagnose möglich ist.

### Vorteile der Erfindung

Ausgehend davon schlägt die vorliegende Erfindung ein Verfahren und ein System zur Bereitstellung von internen, zur Durchführung einer Diagnose relevanten Informationen einer in einem Fahrzeug verfügbaren auf einem Service Gateway laufenden Applikation mit den Merkmalen von Anspruch 1 bzw. Anspruch 8 bereit.

Gemäß Patentanspruch 1 wird ein Verfahren zur Bereitstellung von internen zur Durchführung einer Diagnose relevanten Informationen einer in einem Fahrzeug verfügbaren auf einem Service Gateway laufenden Applikation bereitgestellt, bei dem in der Applikation eine definierte einheitliche Applikationsdiagnoseschnittstelle vorgesehen wird, über welche eine Kommunikation mit dem Service Gateway ermöglicht wird.

In einer Ausführungsform des erfindungsgemäßen Verfahrens werden dabei über die Applikationsdiagnoseschnittstelle spezifische vordefinierte Diagnoseinformationen der Applikation automatisch bereitgestellt. Dadurch wird die Bereitstellung von Diagnoseinformationen von Applikationen vereinheitlicht und vervollständigt. Ferner kann dadurch die Bereitstellung von Diagnoseinformationen durch Applikationen erzwungen werden, indem dies vordefiniert wird. Diese Vorgehensweise erleichtert das Auffinden von Fehlern und eine entsprechende Behebung derselben.

In einer weiteren Ausführungsform des erfindungsgemäßen Verfahrens ermöglicht die Kommunikation mit dem Service Gateway über die Applikationsdiagnoseschnittstelle einen aktiven Zugriff auf interne diagnoserelevante Zustände. Bei derartigen internen diagnoserelavanten Zuständen kann es sich bspw. um zeitnahe bzw. um aktuelle Daten, Parameter, Konfigurationen und/oder Fehlerspeicher der Applikationen handeln. Ein Zugriff auf eine Konfiguration kann dabei sowohl lesend als auch schreibend erfolgen, was mit einem Ändern der Konfiguration einhergehen kann.

Durch das erfindungsgemäße Verfahren wird die oben erwähnte Log-Datei entlastet. Dadurch wird Speicher im System eingespart und die Menge der bei einer Fernabfrage zu übertragenden Daten wesentlich verringert. Dies geht einher mit einer Kostenverringerung bzw.- vermeidung.

In einer weiteren Ausführungsform des erfindungsgemäßen Verfahrens wird über die Applikationsdiagnoseschnittstelle die Durchführung einer Diagnose initiiert. Zum einen kann die Durchführung einer Diagnose von der Applikation selbst angestoßen werden oder aber seitens einer externen Einheit veranlasst werden.

Es ist ferner denkbar, dass über die Applikationsdiagnoseschnittstelle Testparameter, auf Grundlage derer eine Eigendiagnose initiiert wird, übergeben werden und ein sich aus der Eigendiagnose ergebendes Ergebnis kommuniziert wird. Dabei ist es möglich, dass die Testparameter seitens einer externen Diagnoseeinheit, die bspw. auf einem Gateway Operator angeordnet sein kann, übergeben werden oder von einer auf dem gleichen Service Gateway wie die entsprechende Applikation laufenden Applikation zur Verfügung gestellt werden.

Ferner kann das Ergebnis der Eigendiagnose einer entsprechenden das Ergebnis verwertenden externen Diagnoseeinheit kommuniziert werden.

In einer anderen Ausführungsform des erfindungsgemäßen Verfahrens ist es auch denkbar, anstelle einer Eigendiagnose, die von der Applikation selbst durchgeführt wird, eine Ferndiagnose der Applikation zu initiieren. Eine derartige Ferndiagnose kann von einer außerhalb des Service Gateways angeordneten Diagnoseeinheit durchgeführt werden, welche mit der entsprechenden Applikation über die Applikationsdiagnoseschnittstelle kommuniziert. Eine derart externe Diagnoseeinheit kann mit der zu diagnostizierenden Applikation mittelbar über eine auf demselben Service Gateway wie die zu diagnostizierende Applikation laufenden Diagnoseapplikation gekoppelt sein.

Eine erfindungsgemäß vorgesehene Applikationsdiagnoseschnittstelle vereinfacht eine Umsetzung von übergeordneten Diagnoseapplikationen, die auf Diagnoseinformationen verschiedener Applikationen zugreifen müssen. Ferner erleichtert eine derartige Schnittstelle eine Fernabfrage von Diagnoseinformationen und erhöht die Breite und Tiefe einer optional durchzuführenden Diagnose. Dabei ist unter der Breite einer Diagnose die von einer Diagnose erfassten Bereiche und unter Tiefe ein Detaillierungsgrad der Diagnose zu verstehen.

Ferner umfasst die vorliegende Erfindung ein System zur Bereitstellung von internen zur Durchführung einer Diagnose relevanten Informationen von in einem Fahrzeug verfügbaren Applikationen, wobei das System mindestens eine auf einem Service Gateway laufende Applikation mit einer definierten einheitlichen Applikationsdiagnoseschnittstelle und mindestens eine auf dem Service Gateway laufende über die Applikationsdiagnoseschnittstelle mit der Applikation kommunikationsfähige Diagnoseapplikation aufweist, wobei über die Applikationsdiagnoseschnittstelle die Diagnoseinformationen bereitstellbar und/oder abrufbar sind.

In einer anderen Ausführungsform des erfindungsgemäßen Systems ist eine außerhalb des Service Gateways lokalisierte Diagnoseeinheit vorgesehen, mit der die Diagnoseapplikation über eine drahtlose und/oder drahtgebundene Verbindung kommunizieren kann. Dabei handelt es sich bspw. um einen auf einem Gateway Operator lokalisierten Diagnose- und Wartungsserver. Bei der erfindungsgemäß vorgesehenen Diagnoseapplikation, die ebenfalls auf dem Service Gateway läuft, handelt es sich um eine sogenannte Diagnose- und Wartungsapplikation. Eine derartige Diagnose- und Wartungsapplikation ist in der Lage unter Einbeziehung von seitens der Applikation abgerufenen Diagnoseinformationen eine Systemdiagnose durchzuführen. Eine derartige Diagnose- und Warlungsapplikation kann im allgemeinen lokal oder mit Unterstützung eines genannten Diagnose- und Wartungsservers arbeiten.

In einer weiteren Ausführungsform des erfindungsgemäßen Systems ist über die Applikationsdiagnoseschnittstelle die Durchführung einer Diagnose initiierbar. Dies kann durch die betreffende Applikation selbst angestoßen oder aber von einer anderen Einheit initiiert werden. Bspw. ist es denkbar, dass ein auf einem Gateway Operator angeordneter Diagnose- und Wartungsserver eine Diagnose einer oder mehrerer Applikationen über die Applikationsdiagnoseschnittstelle der entsprechenden Applikationen veranlasst.

Weiterhin umfasst die vorliegende Erfindung ein Computerprogramm mit einem Programm, um alle Schritte eines erfindungsgemäßen Verfahrens durchzuführen, wenn das Computerprogramm auf einem Computer oder einer entsprechenden Recheneinheit durchgeführt wird.

Die Erfindung stellt auch ein Computerprogrammprodukt mit einem Programmcode bereit, der auf einem computerlesbaren Datenträger gespeichert ist, um ein erfindungsgemäßes Verfahren durchzuführen, wenn das Computerprogramm auf einem Computer oder einer entsprechenden Recheneinheit durchgeführt wird.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnung

Die Erfindung ist anhand eines Ausführungsbeispiels in der Zeichnung schematisch dargestellt und wird im folgenden unter Bezugnahme auf die Zeichnung ausführlich beschrieben.

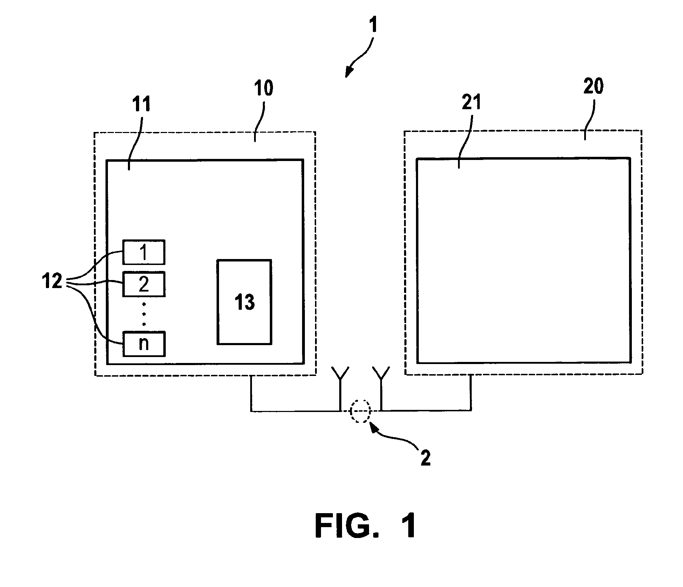

Figur 1 zeigt in schematischer Darstellung eine Ausführungsform eines erfindungsgemäßen Systems.

Figur 1 zeigt ein System 1 zur Bereitstellung von internen zur Durchführung einer Diagnose relevanten Informationen von in einem Fahrzeug verfügbaren Applikationen. Das System 1 umfasst ein Service Gateway 10 und einen Gateway Operator 20. Das Service Gateway 10 ist mit dem Gateway Operator 20 über eine drahtlose oder - gebundene Verbindung 2 verknüpft und bildet zusammen mit dem Gateway Operator 20 ein Service Gateway System.

Der Gateway Operator 20 umfasst neben anderen, hier nicht dargestellten Einheiten, einen Diagnose- und Wartungsserver 21. Das Service Gateway 10 verfügt über ein sogenanntes Framework 11. Auf dem Framework 11 laufen eine Mehrzahl von Applikationen 1 bis n. Alle diese Applikationen verfügen über eine Applikationsdiagnoseschnittstelle 12. Ferner umfasst das Framework 11 eine Diagnose- und Wartungsapplikation 13. Die Diagnoseapplikation 13 kann nunmehr unmittelbar mit den Applikationen 1 bis n über deren Applikationsdiagnoseschnittstelle Stelle 12 kommunizieren. Über die Diagnose- und Wartungsapplikation 13 kann nunmehr durch einen Nutzer des Service Gateways 10 oder von außen eine Diagnose initiiert werden.

Jede Applikation 1 bis n wendet sich im Falle eines Fehlers an ein auf der Diagnose- und Wartungsapplikation 13 vorgesehenes Fehlermanagementsystem und stößt dabei einen Diagnosevorgang an.

Nach Einleitung eines derartigen Diagnosevorganges wird zunächst durch die Diagnose- und Wartungsapplikation 13 eine Verbindung zu dem Diagnose- und Wartungsserver 21, der sich auf dem Gateway Operator 20 befindet, aufgebaut. Der Diagnose- und Wartungsserver 21 fordert über die Diagnose- und Wartungsapplikation 13 Diagnoseinformationen der zu diagnostizierenden Applikationen 1 bis n an. Die Diagnose- und Wartungsapplikation 13 ruft diese Diagnoseinformation über die Applikationsdiagnoseschnittstelle 12 der entsprechenden zu diagnostizierenden Applikationen ab. Ggf. werden die so abgerufenen Diagnoseinformationen seitens der Diagnose- und Wartungsapplikation 13 aufbereitet und anschließend an den Diagnose- und Wartungsserver 21 weitergeleitet.

In einem weiteren Schritt übermittelt nunmehr der Diagnose- und Wartungsserver 21 der Diagnose- und Wartungsapplikation 13 Testparameter. Die Diagnose- und Wartungsapplikation 13 gibt diese Testparameter über die Applikationsdiagnoseschnittstelle 12 an die zu diagnostizierende Applikation weiter.

Nachdem die zu diagnostizierende Applikation mit Hilfe der Testparameter einen Selbsttest durchgeführt hat, werden die Ergebnisse dieser somit durchgeführten Eigendiagnose über die Applikationsdiagnoseschnittstelle 12 zur Diagnose- und Wartungsapplikation 13 geleitet, von wo sie weiter an den Diagnose- und Wartungsserver 21 gesandt werden. Der Diagnose- und Wartungsserver 21 kann dabei die Diagnosefähigkeiten der Diagnose- und Wartungsapplikation 13 ergänzen. Der Diagnose- und Wartungsserver 21 verfügt über einen Funktionsumfang, der abhängig von den Fähigkeiten der mit ihm verbundenen Diagnose- und Wartungsapplikation 13 ist. Dabei sind verschiedene Skalierungen denkbar. Bei einer intelligenten Diagnose- und Wartungsapplikation 13 reduziert sich automatisch der Diagnose- und Wartungsserver 21 beispielsweise auf eine Fernabfrage.

Die Applikationsdiagnoseschnittstelle 12 enthält Methoden, um einen Zugriff auf die internen Daten einer zu diagnostizierenden Applikation oder des Frameworks 11 eines Service Gateways 10 zu ermöglichen. Eine weitere Methode ermöglicht eine Auslösung einer Eigendiagnose. Für eine einfache und unkomplizierte Verarbeitung der Testparameter und der entsprechenden Rückgabewerte in Form eines Ergebnisses wird vorteilhafterweise ein einheitlicher Datentyp verwendet, der Strukturen und Schachtelungen erlaubt. Bei einer Umsetzung mit Java könnte dies bspw. java.util.Map sein. Ferner kann für die unterste Ebene der Schachtelung ein allgemeiner Datentyp verwendet werden, was bei Umsetzung mit Java bspw. java.lang.String sein könnte. Darüber hinaus sollte bei einem Methodeaufruf ein Objekt zur Autorisierung übergeben werden, wodurch ein unbefugtes Ausführen der einzelnen Methoden verhindert wird.

Bei einer Verwendung der erfindungsgemäßen Applikationsdiagnoseschnittstelle im Rahmen eines eingangs erwähnten offenen Service Gateway Systems, wie bspw. gemäß des genannten OSGi-Standards, besteht die Möglichkeit, die Applikationsdiagnoseschnittstelle im Rahmen einer Plattformspezifikation als Bestandteil des offenen Standards zu spezifizieren, d.h. durch eine Treibung des Standardisierungsprozesses. Ferner ist es jedoch auch denkbar, die erfindungsgemäße Applikationsdiagnoseschnittstelle in Form einer proprietären Ergänzung zu einem entsprechenden Standard anzugeben.

Eine erfindungsgemäße Applikationsdiagnoseschnittstelle könnte bspw. wie folgt ausgeführt sein:

```
 /**
 *Interface to be implemented by diagnosable Application. *The interface provides
 methods to get informations upon *the inside states, configuration, known errors, ... of
 the *Application.
 */
 public interface IDiagnosis{
 /**
 *Gets necessary informations for diagnosis.
 *@param actor The user identification object to enable *restricted operation
 *during/for the collection of diagnosis data
 *@retum For diagnosis necessary data like parameter, *properties, internal states,
 *known errors, internal configurations and other important *informations. The data can
 be strucktured into folders and *subfolders.
 *NULL indicates an error at creation for the diagnosis *data.
 */
 public Map getDiagnosisData (Authorisation actor);
 /**
 *Gets returnvalues out of an internal selftest by the *Application
 *@param testParam The test parameter which are to run the *selflest
 *@param actor The user identification object to enable *restricted operation
 *during/for the collection of diagnosis data
 *@return For diagnosis necessary data like parameter, *properties, internal states,
 *known errors, internal configurations and other important *informations. The data can
 be strucktured into folders and *subfolders
 *NULL indicates an error at creation of the diagnosis data.
 */
 public Map selftest (Map testParam, Authorisation actor)
```

## Patentansprüche

1. Verfahren zur Bereitstellung von internen zur Durchführung einer Diagnose relevanten Informationen von mindestens einer in einem Fahrzeug verfügbaren auf einem Service Gateway (10) laufenden Applikation (1, ..., n), bei dem für jede auf dem Service Gateway (10) laufende Applikation (1, ..., n) eine definierte einheitliche Applikationsdiagnoseschnittstelle (12) in der Applikation (1, ..., n) und mindestens eine auf dem Service Gateway (10) laufende über die Applikationsdiagnoseschnittstelle (12) mit der Applikation (1, ..., n) kommunikationsfähige Diagnoseapplikation (13)
vorgesehen wird, wobei über die Applikationsdiagnoseschnittstelle (12) eine Kommunikation mit dem Service Gateway (10) ermöglicht wird sowie Diagnoseinformationen bereitgestellt und/oder abgerufen werden,
**dadurch gekennzeichnet, dass**
sich die mindestens eine Applikation (1, ..., n) im Falle eines Fehlers an ein auf der Diagnoseapplikation (13) vorgesehenes Fehlermanagementsystem wendet und dabei einen Diagnosevorgang anstößt.

2. Verfahren nach Anspruch 1, bei dem über die Applikationsdiagnoseschnittstelle (12) spezifische vordefinierte Diagnoseinformationen der Applikation (1, ..., n) automatisch bereitgestellt werden.

3. Verfahren nach einem der Ansprüche 1 oder 2, bei dem die Kommunikation mit dem Service Gateway (10) über die Applikationsdiagnoseschnittstelle (12) einen aktiven Zugriff auf interne diagnoserelevante Zustände ermöglicht.

4. Verfahren nach Anspruch 3, bei dem ein Zugriff auf zeitnahe Daten, Parameter, Konfigurationen und/oder Fehlerspeicher der Applikation (1, ..., n) ermöglicht wird.

5. Verfahren nach einem der vorhergehenden Ansprüche, bei dem über die Applikationsdiagnoseschnittstelle (12) die Durchführung einer Diagnose initiiert wird.

6. Verfahren nach Anspruch 5, bei dem über die Applikationsdiagnoseschnittstelle (12) Testparameter, auf Grundlage derer eine Eigendiagnose initiiert wird, übergeben werden und ein sich aus der Eigendiagnose ergebendes Ergebnis kommuniziert wird.

7. Verfahren nach Anspruch 5, bei dem über die Applikationsdiagnoseschnittstelle (12) eine Ferndiagnose der Applikation (1, ..., n) initiiert wird.

8. System zur Bereitstellung von internen zur Durchführung einer Diagnose relevanten Informationen von mindestens einer in einem Fahrzeug verfügbaren auf einem Service Gateway (10) laufenden Applikation (1, ..., n), wobei jede auf dem Service Gateway (10) laufende Applikation (1, ..., n) eine definierte einheitliche
Applikationsdiagnoseschnittstelle (12) in der Applikation (1, ..., n) aufweist und das System mindestens eine auf dem Service Gateway (10) laufende über die Applikationsdiagnoseschnittstelle (12) mit der Applikation (1, ..., n) kommunikationsfähige Diagnoseapplikation (13) aufweist, wobei über die Applikationsdiagnoseschnittstelle (12) eine Kommunikation mit dem Service Gateway (10) ermöglicht ist sowie die Diagnoseinformationen bereitstellbar und/oder abrufbar sind,
**dadurch gekennzeichnet, dass**
sich die mindestens eine Applikation (1, ..., n) im Falle eines Fehlers an ein auf der Diagnoseapplikation (13) vorgesehenes Fehlermanagementsystem wendet und dabei einen Diagnosevorgang anstößt.

9. System nach Anspruch 8, bei dem eine außerhalb des Service Gateways (10) lokalisierte Diagnoseeinheit (21) vorgesehen ist, mit der die Diagnoseapplikation (13) über eine drahtlose und/oder -gebundene Verbindung (2) kommunizieren kann.

10. System nach einem der Ansprüche 8 oder 9, bei dem über die Applikationsdiagnoseschnittstelle (12) die Durchführung einer Diagnose initiierbar ist.

11. Computerprogramm mit einem Programm, um alle Schritte eines Verfahrens nach einem der Ansprüche 1 bis 7 durchzuführen, wenn das Computerprogramm auf einem Computer oder einer entsprechenden Recheneinheit durchgeführt wird.

12. Computerprogrammprodukt mit einem Programmcode, der auf einem computerlesbaren Datenträger gespeichert ist, um ein Verfahren nach einem der Ansprüche 1 bis 7 durchzuführen, wenn das Computerprogramm auf einem Computer oder einer entsprechenden Recheneinheit durchgeführt wird.

## Claims

1. Method for providing internal information relevant to the performance of a diagnosis of at least one application (1, ..., n) available in a vehicle and running on a service gateway (10), in which method a defined uniform application diagnosis interface (12) is provided in the application (1, ..., n) and at least one diagnosis application (13), capable of communication with the application (1, ..., n) via the application diagnosis interface (12), running on the service gateway (10) is provided for each application (1, ..., n) running on the service gateway (10), wherein a communication with the service gateway (10) is made possible via the application diagnosis interface (12) and diagnostic information is provided and/or called up, **characterized in that** the at least one application (1, ..., n), in the case of an error, turns to an error management system provided on the diagnosis application (13) and in doing so initiates a diagnosis process.

2. Method according to Claim 1, in which specifically predefined diagnostic information of the application (1, ..., n) is provided automatically via the application diagnosis interface (12).

3. Method according to one of Claims 1 and 2, in which the communication with the service gateway (10) via the application diagnosis interface (12) enables internal diagnosis-related states to be actively accessed.

4. Method according to Claim 3, in which access to real-time data, parameters, configurations and/or error stores of the application (1, ..., n) is enabled.

5. Method according to one of the preceding claims, in which the performance of a diagnosis is initiated via the application diagnosis interface (12).

6. Method according to Claim 5, in which test parameters, on the basis of which a self-diagnosis is initiated, are transferred via the application diagnosis interface (12) and a result resulting from the self-diagnosis is communicated.

7. Method according to Claim 5, in which a remote diagnosis of the application (1, ..., n) is initiated via the application diagnosis interface (12).

8. System for providing internal information relevant to the performance of a diagnosis of at least one application (1, ..., n) available in a vehicle and running on a service gateway (10), wherein each application (1, ..., n) running on the service gateway (10) has a defined uniform application diagnosis interface (12) in the application (1, ..., n) and the system has at least one diagnosis application (13) capable of communication with the application (1, ..., n) via the application diagnosis interface (12), wherein a communication with the service gateway (10) is enabled via the application diagnosis interface (12) and the diagnosis information can be provided and/or called up,
**characterized in that** the at least one application (1, ..., n), in the case of an error, turns to an error management system provided on the diagnosis application (13) and in doing so initiates a diagnosis process.

9. System according to Claim 8, in which a diagnosis unit (21) located outside the service gateway (10) is provided by means of which the diagnosis application (13) can communicate via a wireless and/or wire-connected connection (2).

10. System according to one of Claims 8 and 9, in which the performance of a diagnosis can be initiated via the application diagnosis interface (12).

11. Computer program comprising a program for carrying out all steps of a method according to one of Claims 1 to 7, when the computer program is executed on a computer or a corresponding arithmetic unit.

12. Computer program product comprising a program code which is stored on a computer-readable data medium for carrying out a method according to one of Claims 1 to 7 when the computer program is executed on a computer or a corresponding arithmetic unit.

## Revendications

1. Procédé de mise à disposition d'informations internes pertinentes pour la réalisation d'un diagnostic d'au moins une application (1, ..., n) disponible dans un véhicule et exécutée sur une passerelle de service (10), selon lequel, pour chaque application (1, ..., n) exécutée sur la passerelle de service (10), il est prévu une interface de diagnostic d'application (12) homogène définie dans l'application (1, ..., n) et au moins une application de diagnostic (13) exécutée sur la passerelle de service (10) et pouvant communiquer avec l'application (1, ..., n) par le biais de l'interface de diagnostic d'application (12), l'interface de diagnostic d'application (12) rendant possible une communication avec la passerelle de service (10) et permettant aussi de mettre à disposition et/ou d'invoquer des informations de diagnostic, **caractérisé en ce que** l'au moins une application (1, ..., n), dans le cas d'une erreur, bascule sur un système de gestion des erreurs prévu sur l'application de diagnostic (13) et déclenche ainsi un processus de diagnostic.

2. Procédé selon la revendication 1, selon lequel des informations de diagnostic prédéfinies spécifiques sont automatiquement mises à la disposition de l'application (1, ..., n) par le biais de l'interface de diagnostic d'application (12).

3. Procédé selon l'une des revendications 1 ou 2, selon lequel la communication avec la passerelle de service (10) par le biais de l'interface de diagnostic d'application (12) rend possible un accès actif aux états internes pertinents pour le diagnostic.

4. Procédé selon la revendication 3, selon lequel un accès est rendu possible aux données, paramètres, configurations et/ou mémoires d'erreurs récents de l'application (1, ..., n).

5. Procédé selon l'une des revendications précédentes, selon lequel l'exécution d'un diagnostic est initiée par le biais de l'interface de diagnostic d'application (12).

6. Procédé selon la revendication 5, selon lequel, par le biais de l'interface de diagnostic d'application (12), sont transférés des paramètres de test sur la base desquels un autodiagnostic est initié et un résultat obtenu à partir de l'autodiagnostic est communiqué.

7. Procédé selon la revendication 5, selon lequel un télédiagnostic de l'application (1, ..., n) est initié par le biais de l'interface de diagnostic d'application (12).

8. Système de mise à disposition d'informations internes pertinentes pour la réalisation d'un diagnostic d'au moins une application (1, ..., n) disponible dans un véhicule et exécutée sur une passerelle de service (10), avec lequel, chaque application (1, ..., n) exécutée sur la passerelle de service (10) présente une interface de diagnostic d'application (12) homogène définie dans l'application (1, ..., n) et le système présente au moins une application de diagnostic (13) exécutée sur la passerelle de service (10) et pouvant communiquer avec l'application (1, ..., n) par le biais de l'interface de diagnostic d'application (12), l'interface de diagnostic d'application (12) rendant possible une communication avec la passerelle de service (10) et permettant aussi de mettre à disposition et/ou d'invoquer les informations de diagnostic, **caractérisé en ce que** l'au moins une application (1, ..., n), dans le cas d'une erreur, bascule sur un système de gestion des erreurs prévu sur l'application de diagnostic (13) et déclenche ainsi un processus de diagnostic.

9. Système selon la revendication 8, avec lequel il est prévu une unité de diagnostic (21) située à l'extérieur de la passerelle de service (10), avec laquelle l'application de diagnostic (13) peut communiquer par le biais d'une liaison (2) sans fil et/ou filaire.

10. Système selon l'une des revendications 8 ou 9, avec lequel l'exécution d'un diagnostic peut être initiée par le biais de l'interface de diagnostic d'application (12).

11. Programme informatique comprenant un programme pour exécuter toutes les étapes d'un procédé selon l'une des revendications 1 à 7 lorsque le programme informatique est exécuté sur un ordinateur ou sur une unité de calcul correspondante.

12. Produit de programme informatique comprenant un code de programme qui est enregistré sur un support de données lisible sur un ordinateur pour mettre en oeuvre un procédé selon l'une des revendications 1 à 7 lorsque le programme informatique est exécuté sur un ordinateur ou sur une unité de calcul correspondante.
